(19) Europäisches Patentamt
European Patent Office
Office européen des brevets

(11) EP 4 693 927 A1

(12) **EUROPEAN PATENT APPLICATION**
published in accordance with Art. 153(4) EPC

(43) Date of publication:
**11.02.2026 Bulletin 2026/07**

(21) Application number: **23933903.9**

(22) Date of filing: **25.12.2023**

(51) International Patent Classification (IPC):
***H04B 7/0456*** *(2017.01)*

(52) Cooperative Patent Classification (CPC):
**H04B 7/0417; H04B 7/0456; H04W 4/80**

(86) International application number:
**PCT/CN2023/141400**

(87) International publication number:
**WO 2024/217040 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.04.2023 CN 202310446405**

(71) Applicant: **ZTE Corporation**
**Shenzhen, Guangdong 518057 (CN)**

(72) Inventors:
- **YANG, Jun**
  **Shenzhen, Guangdong 518057 (CN)**
- **CHEN, Yijian**
  **Shenzhen, Guangdong 518057 (CN)**
- **SI, Yuan**
  **Shenzhen, Guangdong 518057 (CN)**
- **ZHANG, Shujuan**
  **Shenzhen, Guangdong 518057 (CN)**
- **LU, Zhaohua**
  **Shenzhen, Guangdong 518057 (CN)**

(74) Representative: **Aipex B.V.**
**Vestdijk 51**
**5611 CA Eindhoven (NL)**

# (54) CHANNEL INFORMATION FEEDBACK METHOD, ELECTRONIC DEVICE, AND STORAGE MEDIUM

(57) Provided are a channel information feedback method, an electronic device, and a storage medium, where the method includes: determining a measurement result of channel state information according to a measured reference signal; determining a codebook, where the codebook includes at least two codewords; determining a codeword W within the codebook according to the measurement result; and feeding back indication information of the codeword W; where r column vectors of the codeword W are constructed according to the following basis vector model u:

$$u = \begin{bmatrix} \alpha_1 v_1 \\ \alpha_2 v_2 \\ \alpha_3 v_3 \\ \vdots \\ \alpha_K v_K \end{bmatrix},$$

where the basis vector model u includes K sub-vectors, the codebook includes at least two codewords $W_1$ and $W_2$, and basis vectors used for constructing a column vector in the codeword $W_1$ form a basis vector set $U_1$, and basis vectors used for constructing a column vector in the codeword $W_2$ form a basis vector set $U_2$, where the basis vector set $U_1$ and the basis vector set $U_2$ satisfies: the number of sub-vectors of at least one basis vector in the basis vector set $U_1$ is different from the number of sub-vectors of a basis vector in the basis vector set $U_2$. Channel information feedback of near-field communication is achieved, thereby enhancing beamforming gain.

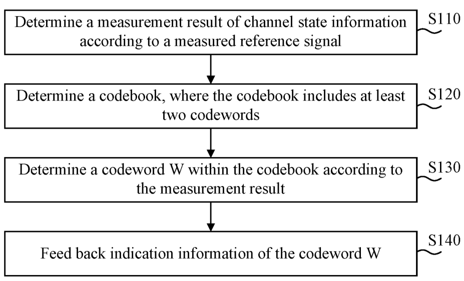


FIG. 4

EP 4 693 927 A1

## Description

TECHNICAL FIELD

The present application relates to the field of wireless communications, particularly a channel information feedback method, an electronic device, and a storage medium.

BACKGROUND

Multiple-input and multiple-output (MIMO) technology is a wireless communication technology based on array antennas. In the conventional array antenna theory, the radiation region of an antenna is typically divided into a far-field region, a radiating near-field region, and a reactive near-field region, as shown in FIG. 1. In FIG. 1, D denotes the aperture of the array, and $\lambda$ denotes a carrier wavelength. When a signal transmitted by the antenna reaches the far-field region, the signal may be approximated as a plane wave. The plane wave approximation in the far-field region brings significant benefits to MIMO wireless communication, which not only simplifies the link budget but also reduces the complexity of beam control. Additionally, the number of parameters required for channel feedback is decreased, and the resource overhead is reduced. Existing communication standards assume that MIMO channels operate under far-field conditions. However, with the advancement of wireless communication technology, the diversification of wireless communication scenarios and the continuous growth in traffic demands have posed numerous challenges to wireless communications. To address these demands, wireless communication technology is increasingly developing towards higher frequency bands to obtain more spectrum resources while developing towards larger-scale transceiver arrays. As the array size gradually increases (that is, the aperture of the antenna expands) and the carrier frequency rises, traditional far-field transmission scenarios are increasingly becoming near-field transmission issues. As shown in FIG. 2, for an array with an aperture of 0.5 meters (m), the boundary between near and far fields is approximately 5 m from the center of the array at 3 GHz. When the frequency rises to 30 GHz, the boundary between near and far fields extends to about 50 m. When the aperture increases to 1.5 m, the boundary between near and far fields at 30 GHz is pushed out to 450 m. As a result, the vast majority of wireless communication scenarios fall within the near-field region of the array.

When a receiving terminal is located in the near-field region, the received signal no longer satisfies the plane wave approximation. If a transmitting array continues to configure a transmit precoding according to existing standard protocols, the received signal at the receiving terminal suffers significant gain loss. Although a series of near-field precoding feedback schemes have been proposed, these schemes have not been widely adopted due to high computational complexity and incompatibility with existing standard protocols. How to perform channel state information feedback in the near-field region of array antennas has become an urgent problem to address.

SUMMARY

The main object of embodiments of the present application is to provide a channel information feedback method, an electronic device, and a storage medium, in which a subarray precoding method is provided to achieve channel state information feedback in near-field communication, thereby solving near-field communication issues and enhancing beamforming gain.

Embodiments of the present application provide a channel information feedback method. The method includes the following.

A measurement result of channel state information is determined according to a measured reference signal.

A codebook is determined, where the codebook includes at least two codewords.

A codeword is determined within the codebook according to the measurement result.

Indication information of the codeword is fed back.

The codeword W is a matrix that has N rows and r columns and includes r column vectors $V_1$, $V_2$, ..., and $V_r$, where $N > 1$, and $r \geq 1$.

The r column vectors of the codeword W are constructed according to the following basis vector model u:

$$u = \begin{bmatrix} \alpha_1 v_1 \\ \alpha_2 v_2 \\ \alpha_3 v_3 \\ \vdots \\ \alpha_K v_K \end{bmatrix}.$$

In the above formula, the basis vector model u includes K sub-vectors, the length of a k-th sub-vector $v_k$ is $N_k$, $\alpha_k$ is a sub-vector coefficient of the k-th sub-vector $v_k$, $K \geq 1$, $1 \leq k \leq K$, and $N_k \geq 1$. The codebook includes at least two codewords $W_1$ and $W_2$, basis vectors used for constructing column vectors in the codeword $W_1$ form a basis vector set $U_1$, and basis vectors used for constructing column vectors in the codeword $W_2$ form a basis vector set $U_2$, where the basis vector set $U_1$ and the basis vector set $U_2$ satisfy: the number of sub-vectors of at least one basis vector in the basis vector set $U_1$ is different from the number of sub-vectors of a basis vector in the basis vector set $U_2$.

Embodiments of the present application provide an electronic device. The electronic device includes one or more processors and a memory.

The memory is configured to store one or more programs.

When the one or more programs are executed by the one or more processors, the one or more processors are caused to perform the method of any embodiment of the present application.

Embodiments of the present application also provide a computer-readable storage medium. The computer-readable storage medium stores one or more programs which, when executed by one or more processors, cause the one or more processors to perform the method of any embodiment of the present application.

## BRIEF DESCRIPTION OF DRAWINGS

FIG. 1 is a diagram illustrating the division of an antenna radiation region according to embodiments of the present application;

FIG. 2 is a diagram illustrating the distance relationships between the near-field/far-field boundary to the array centers of different arrays at different frequency bands according to embodiments of the present application;

FIG. 3 is a diagram of subarray division according to embodiments of the present application;

FIG. 4 is a flowchart of a channel information feedback method according to embodiments of the present application;

FIG. 5 is a diagram of two other types of subarray division according to embodiments of the present application;

FIG. 6 is a structure diagram of a channel information feedback apparatus according to embodiments of the present application; and

FIG. 7 is a structure diagram of an electronic device according to embodiments of the present application.

## DETAILED DESCRIPTION

Embodiments of the present application further provide a computer-readable storage medium. The computer-readable storage medium stores one or more programs which, when executed by one or more processors, cause the one or more processors to perform the method of any embodiment of the present application.

In this embodiment of the present application, a large MIMO array is divided into multiple subarrays, serving as a candidate solution to the near-field communication problem. As shown in FIG. 3, in this solution, a terminal is located in the near-field region of the MIMO array, that is, d is less than $2 D^2/\lambda$, but for the subarray 1, the distance $d_1$ from the terminal to the center point of the subarray 1 may be greater than $2 D_1^2/\lambda$. In this case, a signal transmitted by each subarray may still be assumed to be a plane wave at the user location. The precoding of each subarray may be determined according to existing standards, thereby maintaining good compatibility with existing communication protocols. This scheme has a relatively low implementation cost and can achieve a significant near-field gain improvement. However, how to configure a subarray precoding codebook for this scenario has become a primary issue.

FIG. 4 is a flowchart of a channel information feedback method according to embodiments of the present application. This embodiment of the present application is applicable to the scenario where the MIMO array is divided into multiple subarrays to achieve channel information feedback. The method may be executed by a channel information feedback apparatus. The apparatus may be implemented by software and/or hardware. As shown in FIG. 4, the method provided in this embodiment of the present application includes S110 to S140.

In S110, a measurement result of channel state information is determined according to a measured reference signal.

In this embodiment of the present application, the measurement result of the channel state information may be determined according to the measured reference signal. Specifically, the reference signal transmitted by the communication terminal may be received, and the measurement result of the channel state information may be determined through estimation of the reference signal. The reference signal may be a pilot signal used for channel estimation. The reference signal may be a known signal sequence. The sequence may be denoted as s. The received reference signal may be represented as:

$$y = Hs + n.$$

In the above formula, H denotes a channel matrix, y denotes a received signal vector, and n denotes a noise vector. The channel estimation may be performed based on the received reference information by means of minimum mean-square error (MMSE), low-order linear minimum mean-square error (LMMSE) or the like, and then the channel matrix H is determined and used as the channel state information. It is to be understood that since the dimension of H is generally large, directly feeding H back to a first communication node may cause a large overhead, and thus, the channel information generally needs to be quantized.

In S120, a codebook is determined, where the codebook includes at least two codewords.

The codebook may be an information set for precoding subarrays in the MIMO array. The codebook may include codewords. Each codeword may be used for precoding the MIMO array. It is to be understood that at least two codewords in the codebook are obtained by using the basis vector model of this embodiment of the present application. For example, all codewords in the codebook may be obtained by using the basis vector model of the present application, or some codewords in the codebook are obtained by using the basis vector model of the present application, and other codewords may be generated by using other models.

In this embodiment of the present application, one or more codebooks may be preconfigured based on the communication transmission scenario and the communication transmission requirement, and the codebook for feeding back channel state information may be selected from the one or more codebooks. Specifically, in some embodiments, the codebook may be determined based on the measurement result of the channel state information, or the maximum number of transmission layers of the current channel may be determined based on the value of the channel matrix H or the channel quality indication information so that a proper codebook is determined.

In S130, a codeword W is determined within the codebook according to the measurement result.

In this embodiment of the present application, the codeword in the codebook may be an N-by-r matrix. The matrix includes r column vectors $V_1$, $V_2$, ..., and $V_r$, and each column vector has a length N, where N > 1, and the value of r may be obtained from a basis vector model. The basis vector model is represented as follows:

$$u = \begin{bmatrix} \alpha_1 v_1 \\ \alpha_2 v_2 \\ \vdots \\ \alpha_K v_K \end{bmatrix}.$$

The basis vector model may include a sub-vector $v_k$ and a sub-vector coefficient $\alpha_k$, where k = 1, 2, ..., K. The length of the sub-vectors $v_k$ is $N_k$, and the sum of the lengths of the sub-vectors is N. Each sub-vector in the basis vector model may correspond to a precoding matrix of one subarray. The sub-vector $v_k$ represents a precoding vector used for array beam control, and the MIMO array may radiate a directional beam in a specified direction or a group of directional beams in specified directions through the precoding vector. The sub-vector coefficients $\alpha_k$ may be used for achieving the phase alignment of different subarrays in the MIMO array. The products of the sub-vectors and the corresponding sub-vector coefficients may be used as the actual precoding vectors for the subarrays in the MIMO array. The basis vector model may satisfy the following conditions: A sub-vector may be determined according to another sub-vector; a sub-vector may be determined by another sub-vector coefficient; a sub-vector coefficient may be determined by another sub-vector coefficient; and a sub-vector coefficient may be determined by a sub-vector.

In this embodiment of the present application, the basis vector model u may be divided into K sub-vectors, and each sub-vector may correspond to the precoding of one subarray. Specifically, the sub-vector $v_k$ represents a precoding vector used for array beam control and may be selected from one or more given basis vector sets. When the precoding is loaded to one subarray of the MIMO array, the precoding may enable the subarray to radiate a directional beam in a specified direction or a group of directional beams in specified directions. As shown in FIG. 3, the subarrays may be logically divided subarrays, may be physically isolated subarrays or may be spatially separated subarrays with certain distances between them. Referring to FIG. 5(a), a large array is divided into two subarrays: the upper subarray is a +45° polarized array, and the lower subarray is a -45° polarized array. The above design facilitates polarization isolation and reduces interference between dual-polarized signals. FIG. 5(b) shows coordinated distributed array communication,

where two separated arrays may be considered as two subarrays of a large array. The communication scenarios in FIGS. 3 and 5 involve subarray precoding, and the codebook model proposed in the present application is applicable to the above scenarios and is also applicable to other future communication scenarios requiring subarray division.

In S140, indication information of the codeword W is fed back, where the codeword W is a matrix of N rows and r columns and includes r column vectors $V_1$, $V_2$, ..., and $V_r$ having a length N, wherein N > 1, and r ≥ 1. An i-th column vector $V_i$ of the codeword W is constructed according to the following basis vector model:

$$u = \begin{bmatrix} \alpha_1 v_1 \\ \alpha_2 v_2 \\ \vdots \\ \alpha_K v_K \end{bmatrix}.$$

In the above formula, the basis vector model u includes K sub-vectors, the length of a k-th sub-vector $v_k$ is $N_k$, $\alpha_k$ is a sub-vector coefficient, K ≥ 1, 1 ≤ k ≤ K, and $N_k \geq 1$. The codebook includes at least two codewords $W_1$ and $W_2$, basis vectors used for constructing column vectors in the codeword $W_1$ form a basis vector set $U_1$, and basis vectors used for constructing column vectors in the codeword $W_2$ form a basis vector set $U_2$, where the basis vector set $U_1$ and the basis vector set $U_2$ satisfy: the number of sub-vectors of at least one basis vector in the basis vector set $U_1$ is different from the number of sub-vectors of a basis vector in the basis vector set $U_2$.

It is to be understood that the column vectors in the codebooks $W_1$ and $W_2$ may be constructed by basis vectors including different numbers of sub-vectors. When the number of sub-vectors of the basis vector varies, the number of corresponding subarrays in the MIMO array varies. Therefore, the codebooks $W_1$ and $W_2$ may be used for precoding configuration when the MIMO array adopts different subarray division schemes. Such a codebook design scheme can enhance the flexibility of MIMO subarray division and achieve better adaptation to diverse transmission scenarios. In this embodiment of the present application, the indication information of the codeword determined in the above steps may be determined, and the codebook used by the communication terminal for communication is indicated through the indication information. It is to be understood that since the codebook includes one or more precoding vectors, directly feeding back the codebook may cause significant channel resource overhead, and then the channel overhead for codebook transmission may be reduced through the indication information. The indication information may be used for indicating the codebook. It is to be noted that in this embodiment of the present application, the codebook may be obtained based on the basis vector model. The basis vector model includes sub-vectors and sub-vector coefficients, and any sub-vector or any sub-vector coefficient may be determined by another sub-vector or another sub-vector coefficient, that is, at least one sub-set $FS_1$ of the set FS including the sub-vectors of the basis vectors and the sub-vector coefficients is determined by at least one of the other sub-sets $FS_2$. The indication information indicating the codebook may be numerical values or other forms of identifiers.

Specifically, the codebook includes at least two codebooks $W_1$ and $W_2$. The column vectors in the codebook $W_1$ may be constructed by multiple basis vectors. The set of these basis vectors may be denoted as a basis vector set $U_1$, and elements in the basis vector set $U_1$ may be the column vectors constructing the codebook $W_1$. It is to be noted that the column vectors constructing the codebook $W_1$ may be constructed by individual elements alone or through the combination of multiple elements. For example, the column vector in the codebook $W_1$ may be formed by the Kronecker product of two basis vectors or the column vector in the codebook $W_1$ may be generated by a weighted sum of multiple basis vectors. Therefore, the number of elements in the basis vector set $U_1$ may differ from the number of column vectors in the codebook $W_1$. Similarly, the basis vectors constructing the column vectors of the codebook $W_2$ may form a basis vector set $U_2$. It is to be noted that the number of sub-vectors of at least one basis vector in the basis vector set $U_1$ is different from the number of sub-vectors of a basis vector in the basis vector set $U_2$.

In some embodiments, the basis vectors in the basis vector set $U_1$ are grouped into $C_1$ basis vector groups, the basis vectors in the basis vector set $U_2$ are grouped into $C_2$ basis vector groups, the basis vectors belonging to the same one basis vector group including the same number of sub-vectors, and the number of sub-vectors included in at least one basis vector group of the basis vector set $U_1$ is different from the number of sub-vectors included in one basis vector group of the basis vector set $U_2$, where $C_1 \geq 1$, and $C_2 \geq 1$. In this embodiment of the present application, the basis vectors in the basis vector set $U_1$ may be grouped into at least one basis vector group, each basis vector in the basis vector set $U_1$ may be grouped into one basis vector group according to the number of sub-vectors included therein, and the basis vectors in each basis vector group of the basis vector set $U_1$ include the same number of sub-vectors. Correspondingly, the basis vectors in the basis vector set $U_2$ may also be grouped into at least one basis vector group, and the basis vectors in each basis vector group of the basis vector set $U_2$ include the same number of sub-vectors. The number of sub-vectors included in at least one basis vector group of the basis vector set $U_1$ is different from the number of sub-vectors included in one basis vector group of the basis vector set $U_2$.

In an example embodiment, the codeword $W_1$ and the codeword $W_2$ may include different numbers of column vectors. For the different column vectors in the codeword $W_1$, the one or more basis vectors constructing these column vectors include the same sub-vector number $K_1$. Similarly, for the different column vectors in the codeword $W_2$, the one or more basis vectors constructing these column vectors include the same sub-vector number $K_2$. The sub-vector number $K_1$ is different from the sub-vector number $K_2$. The different codewords $W_1$ and $W_2$ may support different numbers of transmission streams, thereby enabling the codeword to be simultaneously adopted under varying user channel conditions. It is to be understood that if two codewords support different numbers of transmission layers, basis vectors including different numbers of sub-vectors may be adopted to construct the column vectors of the codewords.

To support the transmission of a greater number of streams, a more granular characterization of the near-field channel is required. Therefore, the MIMO array needs to be divided into smaller subarrays. Consequently, each column vector in the corresponding precoding codeword includes a greater number of sub-vectors. Assuming the codeword $W_1$ includes two column vectors and the codeword $W_2$ includes three column vectors, according to the principle that a higher number of streams necessitates a greater number of subarrays, the basis vectors constructing the column vectors in the codeword $W_2$ include more sub-vectors than the basis vectors constructing the column vectors in the codeword $W_1$. For example, the basis vectors constructing the column vectors in the codeword $W_1$ each include four sub-vectors, and the basis vectors constructing the column vectors in the codeword $W_2$ each include six sub-vectors. All the above basis vectors satisfy the basis vector model u provided in this embodiment of the present application, and the codewords $W_1$ and $W_2$ are as follows:

$$W_1 = \begin{pmatrix} \alpha_{11}v_{11} & \alpha_{21}v_{21} \\ \alpha_{12}v_{12} & \alpha_{22}v_{22} \\ \alpha_{13}v_{13} & \alpha_{23}v_{23} \\ \alpha_{14}v_{14} & \alpha_{24}v_{24} \end{pmatrix}, \quad W_2 = \begin{pmatrix} \alpha_{11}v_{11} & \alpha_{21}v_{21} & \alpha_{31}v_{31} \\ \alpha_{12}v_{12} & \alpha_{22}v_{22} & \alpha_{32}v_{32} \\ \alpha_{13}v_{13} & \alpha_{23}v_{23} & \alpha_{33}v_{33} \\ \alpha_{14}v_{14} & \alpha_{24}v_{24} & \alpha_{34}v_{34} \\ \alpha_{15}v_{15} & \alpha_{25}v_{25} & \alpha_{35}v_{35} \\ \alpha_{16}v_{16} & \alpha_{26}v_{26} & \alpha_{36}v_{36} \end{pmatrix}.$$

In another example embodiment, the feedback of channel information is subject to the constraint from resource overhead, that is, the feedback information has a fixed length. Under such a constraint, to strike a balance in feedback overhead, a higher number of layers may correspond to a smaller number of subarrays. Assuming the codeword $W_1$ includes two column vectors and the codeword $W_2$ includes three column vectors, considering the feedback overhead, the column vectors in the codeword $W_2$ are constructed by basis vectors including fewer sub-vectors compared to the column vectors in the codeword $W_1$. For example, the column vectors in the codeword $W_1$ are each constructed by basis vectors including five sub-vectors, and the column vectors in the codeword $W_2$ are each constructed by basis vectors including three sub-vectors, that is,

$$W_1 = \begin{pmatrix} \alpha_{11}v_{11} & \alpha_{21}v_{21} \\ \alpha_{12}v_{12} & \alpha_{22}v_{22} \\ \alpha_{13}v_{13} & \alpha_{23}v_{23} \\ \alpha_{14}v_{14} & \alpha_{24}v_{24} \\ \alpha_{15}v_{15} & \alpha_{25}v_{25} \end{pmatrix}, \quad W_2 = \begin{pmatrix} \alpha_{11}v_{11} & \alpha_{21}v_{21} & \alpha_{31}v_{31} \\ \alpha_{12}v_{12} & \alpha_{22}v_{22} & \alpha_{32}v_{32} \\ \alpha_{13}v_{13} & \alpha_{23}v_{23} & \alpha_{33}v_{33} \end{pmatrix}.$$

In the above embodiments, the one or more column vectors constructing the codeword may satisfy the form of the basis vector model u. In some embodiments, each column may be constructed by one basis vector. In other embodiments, the column vectors in the codeword $W_1$ may be constructed by two or more basis vectors. Similarly, the column vectors in the codeword $W_2$ may also be constructed by two or more basis vectors, and the number of sub-vectors in at least one basis vector used for constructing the column vectors in the codeword $W_1$ is different from the number of sub-vectors in at least one basis vector used for constructing the column vectors in the codeword $W_2$.

In another embodiment, multiple nodes communicating with the MIMO array are located in the near-field and far-field regions, respectively. For example, the codeword $W_1$ is used for serving communication nodes in the near-field region, and the codeword $W_2$ is used for serving communication nodes in the far-field region. Generally, dividing the MIMO array into multiple subarrays does not provide significant beamforming gain for the far-field region. Therefore, subarray division may be omitted. At this point, the column vectors of the codeword $W_1$ may each include multiple sub-vectors, and

the number of sub-vectors in each of the column vectors of the codeword $W_2$ is one.

It is to be understood that the basis vectors constructing the column vectors of the codeword provided in this embodiment of the present application all satisfy the basis vector model u. The process of basis vectors constructing the column vectors of the codeword may include: a single basis vector solely constructs a column vector of the codeword, the Kronecker product of two basis vectors constructs a column vector of the codeword, or the weighted sum of multiple basis vectors constructs a column vector of the codeword.

In another example embodiment, the codewords $W_1$ and $W_2$ include the same number of column vectors. At least one column vector exists in the codewords $W_1$ and $W_2$, respectively, and the basis vectors for constructing these column vectors include different numbers of sub-vectors. For codewords supporting the same number of streams, differences in channel conditions also exist. Therefore, different subarray division strategies may be adopted, and correspondingly, different codewords are allowed to include column vectors constructed by basis vectors including different numbers of sub-vectors.

Allowing different codewords in the codebook to include column vectors constructed by basis vectors including different numbers of sub-vectors can not only enable codeword optimization under specific channel conditions, thereby enhancing the performance of the MIMO system, but also help balance feedback overhead, thereby facilitating standardization and engineering implementation. On the other hand, in near-field communication, the closer a reception point is to the array center, the greater the variation in the distance from different antenna elements to the reception point. Therefore, a larger number of sub-vectors are required to characterize the channel. The codeword model provided by the present application can flexibly adapt to near-field communication scenarios, thereby improving array transmission performance.

In some embodiments of the present application, a subset $FS_2$ is determined according to a subset $FS_1$ of a set $FS = [v_1, v_2, ..., v_K, \alpha_1, \alpha_2, ..., \alpha_K]$ including sub-vectors and sub-vector coefficients in the basis vector model u.

Specifically, the MIMO array utilizes the principle of in-phase superposition to achieve beamforming. To ensure that the electromagnetic signals radiated by each antenna element are superposed in phase in a specified direction, the initial phases of two adjacent sub-vectors exhibit a correlation relationship. Similarly, in the basis vector model u provided in this embodiment of the present application, such a correlation relationship may exist between sub-vectors and sub-vector coefficients. The correlation relationship between sub-vectors and sub-vector coefficients may be determined according to the spatial positional relationship between the subarrays of the MIMO array. The set including sub-vectors and sub-vector coefficients in the basis vector model u may be denoted as $FS = [v_1, v_2, ..., v_K, \alpha_1, \alpha_2, ..., \alpha_K]$. The FS includes at least two sub-sets that are denoted as $FS_1$ and $FS_2$, respectively. The basis vector model u at least satisfies the condition that the sub-set $FS_1$ is determined by the sub-set $FS_2$ or the sub-set $FS_2$ is determined by the sub-set $FS_1$.

Further, on the basis of the above embodiments of the present application, the indication information includes at least one indication parameter for the sub-vector of the basis vector constructing the column vector in the codeword W, where the basis vector satisfies the basis vector model u.

In this embodiment of the present application, the indication information for the fed back codeword W includes at least one indication parameter. The indication parameter may indicate the sub-vector constructing the column vector of the codeword W. A communication node receiving the indication information may instruct the sub-vector to construct the column vector of the codeword W through the indication parameter to achieve the reception of the codeword W, thereby enabling feedback of the channel state.

Further, on the basis of the above embodiments of the present application, the indication information includes at least one indication parameter and an indication parameter simultaneously indicates at least two sub-vectors or at least two sub-vector coefficients.

In this embodiment of the present application, the indication information of the codeword may include one or more indication parameters, the one or more indication parameters may include at least one indication parameter, and an indication parameter of the at least one indication parameter simultaneously indicates at least two sub-vectors or at least two sub-vector coefficients. The communication node receiving the indication information may determine one or more basis vectors constructing the column vector of the codeword according to at least two sub-vectors or at least two sub-vector coefficients simultaneously indicated by the indication parameter.

In an example embodiment, the sub-vectors and sub-vector coefficients in the basis vector model u may construct the set FS, and the set FS satisfies the following relationship: a subset $FS_2$ of the set $FS = [v_1, v_2, ..., v_k, \alpha_1, \alpha_2, ..., \alpha_K]$ may be determined according to a subset $FS_1$ of the set FS.

In this embodiment of the present application, due to the existence of a well-defined spatial positional relationship between subarrays in the array antenna, the correlation relationship between subarray precoding may be derived according to the positional relationship. Consequently, a defined correlation relationship exists between the sub-vectors and their corresponding coefficients in the basis vector model u. According to a selected precoding type, the remaining parts of the basis vector model u may be determined based on a part of the sub-vectors or a part of sub-vector coefficients.

In some embodiments, a k-th coefficient of the basis vector model u is determined according to at least one matrix and one coefficient in the set $[v_1, v_2, ..., v_k, \alpha_1, \alpha_2, ..., \alpha_{k-1}]$.

In some other embodiments, the k-th sub-vector of the basis vector model u may be determined according to at least one matrix and one coefficient in the set $[v_1, v_2, ..., v_{k-1}, \alpha_1, \alpha_2, ..., \alpha_k]$.

In some embodiments, the sub-vectors in the basis vectors constructing the column vectors of the codeword have the same length. The codeword model may be simplified by adopting sub-vectors having the same length, and fewer configuration parameters are required when the codeword is generated according to the indication information, thereby leading to simpler engineering implementation. However, certain performance loss may be caused in near-field communication.

In another embodiment, at least two sub-vectors in the column vectors of the codeword have different lengths. Correspondingly, at least two subarrays among the subarrays of the MIMO array include different numbers of antenna elements, as shown in FIGS. 3 and 5. Using sub-vectors of different lengths can further improve the accuracy of channel characterization and bring higher gain to the MIMO array.

In some embodiments of the present application, the k-th sub-vector $v_k$ of the basis vector model u satisfies the following form:

$$v_k = \begin{cases} \begin{bmatrix} 1 & e^{j\theta_k} & \cdots & e^{j(N_k-1)\theta_k} \end{bmatrix}, & N_k > 1, \\ 1, & N_k = 1, \end{cases}$$

where $\theta_k$ is a real number, and j is an imaginary unit.

In this embodiment of the present application, when the sub-vectors of the basis vector model have a length of 1, the sub-vectors may be 1; when the lengths of the sub-vectors are greater than 1, the sub-vectors may be $[1\ e^{j\theta k} ... e^{j(Nk-1)\theta k}]$, where $\theta_k$ is a real number, and j is an imaginary unit.

In some other embodiments of the present application, the k-th sub-vector $v_k$ of the basis vector model u is formed by the Kronecker product of two basis vectors $v_{k1}$ and $v_{k2}$, where the two basis vectors $v_{k1}$ and $v_{k2}$ each satisfy the following form:

$$v_{kl} = \begin{cases} \begin{bmatrix} 1 & e^{j\theta_{kl}} & \cdots & e^{j(N_{kl}-1)\theta_{kl}} \end{bmatrix}, & N_{kl} > 1, \\ 1, & N_{kl} = 1, \end{cases}$$

where $\theta_{k1}$ is a real number, j is an imaginary unit, 1 E [1, 2], and $N_{k1} * N_{k2} = N_k$.

In this embodiment of the present application, the sub-vectors of the basis vector model may be the Kronecker product of two basis vectors, and the product of the lengths of two basis vectors may be the lengths of the sub-vectors of the basis vector model. When the sub-vectors have a length of 1, the sub-vectors may be 1; when the lengths of the sub-vectors are greater than 1, the sub-vectors may be $[1\ e^{j\theta k} ... e^{j(Nk-1)\theta k}]$, where $\theta_k$ is a real number, j is an imaginary unit, and $1 \in [1, 2]$.

In some embodiments of the present application, the k-th sub-vector $v_k$ of the basis vector model u satisfies the following form:

$$v_k = \begin{cases} \begin{bmatrix} 1 & e^{j\theta_k^{(1)}} & \cdots & e^{j\theta_k^{(N_k-1)}} \end{bmatrix}, & N_k > 1, \\ 1, & N_k = 1, \end{cases}$$

where $\theta_k^{(n)} = \xi_k + n\eta_k + n^2\zeta_k$, $\xi_k$, $\eta_k$ and $\zeta_k$ are preset real-valued constants, j is an imaginary unit, and $1 \leq n \leq N_k$.

Specifically, when the lengths are greater than 1, the values of the sub-vectors of the basis vector model are determined through $\begin{bmatrix} 1 & e^{j\theta_k^{(1)}} & \cdots & e^{j\theta_k^{(N_k-1)}} \end{bmatrix}$, and $\theta_k^{(n)}$ may be determined through $\theta_k^{(n)} = \xi_k + n\eta_k + n^2\zeta_k$ and the three preset real-valued constants $\xi_k$, $\eta_k$ and $\zeta_k$.

In some embodiments of the present application, the k-th sub-vector $v_k$ of the basis vector model u is formed by the Kronecker product of two basis vectors $v_{k1}$ and $v_{k2}$, where the two basis vectors each satisfy the following form:

$$v_{kl} = \begin{cases} \begin{bmatrix} 1 & e^{j\theta_{kl}^{(1)}} & \cdots & e^{j\theta_{kl}^{(N_{kl}-1)}} \end{bmatrix}, & N_{kl} > 1, \\ 1, & N_{kl} = 1, \end{cases}$$

where $\theta_{kl}^{(n)} = \xi_{kl} + n\eta_{kl} + n^2\zeta_{kl}$, $\xi_{kl}$, $\eta_{kl}$, and $\zeta_{kl}$ are preset real-valued constants, j is an imaginary unit, $1 \in [1, 2]$, $1 \le n \le N_{kl}$, and $N_{k1}*N_{k2} = N_k$.

Specifically, the sub-vectors of the basis vector model may be the Kronecker product of two basis vectors, and when the lengths of the sub-vectors are greater than 1, the values of two basis vectors are determined through $\begin{bmatrix} 1 & e^{j\theta_k^{(1)}} & \cdots & e^{j\theta_k^{(N_k-1)}} \end{bmatrix}$, where $\theta_k^{(n)}$ may be determined through $\theta_k^{(n)} = \xi_k + n\eta_k + n^2\zeta_k$ and the three preset real-valued constants $\xi_k$, $\eta_k$ and $\zeta_k$.

In an example embodiment, the sub-vectors of the basis vector model u for constructing the column vectors of the codeword W satisfy the following form:

$$v_k = \left(v_{k1} \otimes v_{k2}\right)^T.$$

In the above formula, the operator $\otimes$ represents a Kronecker product, $v_{k1}$ and $v_{k2}$ represent two basis vectors, and the superscript T represents transpose. The basis vectors may be selected from the basis vector set according to the indication information or may be generated according to the preset parameters and the indication information.

In an example wireless communication scenario, $v_{k1}$ and $v_{k2}$ may take the following uniform phase gradient form:

$$v_{k1} = \begin{cases} \begin{bmatrix} 1 & e^{j\theta_{k1}} & \cdots & e^{j(N_{k1}-1)\theta_{k1}} \end{bmatrix}, & N_{k1} > 1, \\ 1, & N_{k1} = 1, \end{cases}$$

$$v_{k2} = \begin{cases} \begin{bmatrix} 1 & e^{j\theta_{k2}} & \cdots & e^{j(N_{k2}-1)\theta_{k2}} \end{bmatrix}, & N_{k2} > 1, \\ 1, & N_{k2} = 1, \end{cases}$$

where $\theta_{k1}$ and $\theta_{k2}$ are preset real-valued constants and may be selected from a given set, $N_i = N_{i1}*N_{i2}$, and j is an imaginary unit.

In another example wireless communication scenario, $v_{k1}$ and $v_{k2}$ may take the following form:

$$v_{k1} = \begin{cases} \begin{bmatrix} 1 & e^{j\theta_{k1}^{(1)}} & \cdots & e^{j\theta_{k1}^{(N_{k1}-1)}} \end{bmatrix}, & N_{k1} > 1, \\ 1, & N_{k1} = 1, \end{cases}$$

$$v_{k2} = \begin{cases} \begin{bmatrix} 1 & e^{j\theta_{k2}^{(1)}} & \cdots & e^{j\theta_{k2}^{(N_{k2}-1)}} \end{bmatrix}, & N_{k2} > 1, \\ 1, & N_{k2} = 1, \end{cases}$$

where $\theta_{kl}^{(n)} = \xi_{kl} + n\eta_{kl} + n^2\zeta_{kl}$, $\xi_k$, $\eta_k$ and $\zeta_k$ are preset real-valued constants and may be selected from a given set, j is an imaginary unit, $1 \in [1,2]$, $1 \le n \le N_{kl}$, and $N_{k1}*N_{k2} = N_k$. The coefficient $\alpha_k$ is used for determining the initial phase and amplitude of the k-th subarray precoding $v_k$. The coefficient $\alpha_k$ in the basis vector model may be written in an exponential form $\alpha_k = a_k e^{j\varphi_k}$, where $\alpha_k$ is the amplitude of the coefficient, and $\varphi_k$ is the phase of the coefficient. In an embodiment, $\alpha_m$ may be fixed as a unit amplitude, that is, $\alpha_m = e^{j\varphi_m}$, and is a unit complex number.

Since the coefficients of the sub-vectors constructing the basis vectors may determine the initial phase of the subarrays, the coefficient $\alpha_1$ may determine the overall phase offset of the column vector V. Under general conditions, presetting $\alpha_1 = 1$ may be considered to simplify the model and reduce feedback overhead. However, in some complex scenarios, configuring an appropriate $\alpha_1$ is necessary to achieve better beamforming gain.

In some embodiments, the i-th column vector $V_i$ of the codeword W is a column vector satisfying the basis vector model u, where i = 1, 2,..., r.

Specifically, the codeword W may include column vectors. Each column vector may be determined through the basis vector model u, meaning each column vector $V_i$ satisfies the requirements of the basis vector model u. In other words, all r column vectors constructing the codeword comply with the requirements of the basis vector model u.

For example, the column vectors of the codeword comply with the basis vector model u, that is, the i-th column vector $V_i$ of the codeword W satisfies:

$$V_i = u_i = \begin{bmatrix} \alpha_{i1} v_{i1} \\ \alpha_{i2} v_{i2} \\ \vdots \\ \alpha_{iK} v_{iK} \end{bmatrix}.$$

In the above formula, $u_i$ satisfies the structure of the basis vector model u, and i = 1, 2, ..., r.

In some other embodiments of the present application, the i-th column vector $V_i$ of the codeword W is formed by the Kronecker product of two vectors $u_1$ and $u_2$, where $u_1$ and $u_2$ are column vectors satisfying the basis vector model u.

In this embodiment of the present application, each of the r column vectors of the codeword W may be formed by the Kronecker product of two vectors $u_1$ and $u_2$, and $u_1$ and $u_2$ are column vectors satisfying the basis vector model u.

For example, the i-th column vector $V_i$ of the codeword W is formed by the Kronecker product of two vectors $u_{i1}$ and $u_{i2}$, that is, $V_i = u_{i1} \otimes u_{i2}$, where $u_{i1}$ and $u_{i2}$ satisfy the structure of the basis vector model u:

$$u_{i1} = \begin{bmatrix} \alpha_{i1,1} v_{i1,1} \\ \alpha_{i1,2} v_{i1,2} \\ \vdots \\ \alpha_{i1,K1} v_{i1,K1} \end{bmatrix}, u_{i2} = \begin{bmatrix} \alpha_{i2,1} v_{i2,1} \\ \alpha_{i2,2} v_{i2,2} \\ \vdots \\ \alpha_{i2,K2} v_{i2,K2} \end{bmatrix}.$$

In the above formula, $K_1 \geq 1$, and $K_2 \geq 1$.

In some other embodiments of the present application, the i-th column vector $V_i$ of the codeword W is generated by a weighted sum of M column vectors:

$$V_i = \sum_{m=1}^{M} \beta_m u_m .$$

In the above formula, $\beta_m$ is a weight coefficient, $u_m$ is a column vector satisfying the basis vector model u, i = 1, 2, ..., r, and m = 1, 2, ..., M.

Specifically, a column vector in the codeword W may be generated by a weighted sum of multiple column vectors. The column vectors participating in the weighted summation may be column vectors complying with the basis vector model, and the weight coefficients corresponding to the column vectors participating in the weighted summation may be the same or different.

In some other embodiments of the present application, the i-th column vector $V_i$ of the codeword W is generated by a weighted sum of M column vectors:

$$V_i = \sum_{m=1}^{M} \beta_m w_m .$$

In the above formula, $\beta_m$ is a weight coefficient, $w_m$ is formed by the Kronecker product of two column vectors $u_{m1}$ and $u_{m2}$, $u_{m1}$ and $u_{m2}$ are column vectors satisfying the basis vector model u, i = 1, 2, ..., r, and m = 1, 2, ..., M.

In this embodiment of the present application, a column vector in the codeword W may be generated by a weighted sum of multiple column vectors. The column vectors participating in the weighted summation may be the Kronecker product of two column vectors complying with the basis vector model, and the weight coefficients corresponding to the column vectors participating in the weighted summation may be the same or different.

In some other embodiments of the present application, the i-th column vector $V_i$ of the codeword W satisfies the following form:

$$V_i = \begin{bmatrix} c_1 V_{i1} \\ c_2 V_{i2} \\ \vdots \\ c_S V_{iS} \end{bmatrix}.$$

In the above formula, $c_s$ is a coefficient, $V_{is}$ is a sub-vector, and $V_{is}$ is generated in at least one of the following manners, where s = 1, 2, ..., S.

$V_{is}$ is directly generated from the basis vector model u.

$V_{is}$ is formed by the Kronecker product of two vectors $u_1$ and $u_2$, where $u_1$ and $u_2$ are column vectors satisfying the basis vector model u.

$V_{is}$ is generated by a weighted sum of M column vectors of the basis vector model according to $V_{is} = \sum_{m=1}^{M} \beta_m u_m$, where $\beta_m$ is a weight coefficient, $u_m$ is a column vector satisfying the basis vector model u, i = 1, 2, ..., r, and m = 1, 2, ..., M.

$V_{is}$ is generated by a weighted sum of M column vectors of the basis vector model according to $V_{is} = \sum_{m=1}^{M} \beta_m w_m$, where $\beta_m$ is a weight coefficient, $w_m$ is formed by the Kronecker product of two column vectors $u_{m1}$ and $u_{m2}$, $u_{m1}$ and $u_{m2}$ are column vectors satisfying the basis vector model u, i = 1, 2, ..., r, and m= 1, 2, ..., M.

Specifically, the r column vectors constructing the codeword W may include multiple sub-vectors. Each sub-vector has a corresponding coefficient, and each sub-vector may be implemented through the basis vector model. It is to be understandable that the method for generating sub-vectors through the basis vector model include, but are not limited to, at least one of the following: a vector corresponding to the basis vector model are directly taken as a sub-vector; the Kronecker product of two vectors complying with the basis vector model is taken as a sub-vector; the weighted sum of multiple vectors complying with the basis vector model is taken as a sub-vector; or the weighted sum of multiple vectors is taken as a sub-vector, where each vector is the Kronecker product of two vectors complying with the basis vector model.

In the above embodiments, the weight coefficient $\beta_m$ may be a preset value. For example, in one case, the weight coefficient satisfies $\sum_{m=1}^{M} \beta_m = 1$, and $\beta_m$ =1/M. For example, in another case, the weight coefficient $\beta_m$ is determined according to the value of M. For example, when M = 2, $\beta_1$ = 0.6, and $\beta_2$ = 0.4; when M = 3, $\beta_1$ = 0.5, $\beta_2$ = 0.3, and $\beta_3$ = 0.2. In the above embodiments, the coefficient $c_s$ may be a preset value. In a communication scenario, $c_s$ is a fixed constant, for example, $c_s$ = 1; or $c_s$ is a constant greater than 0 and less than 1 and increases with the index s. In another communication scenario, $c_s$ is determined according to indication information.

Further, on the basis of the above embodiments of the present application, the basis vector in the basis vector set $U_1$ has the same first number of sub-vectors, the basis vector in the basis vector set $U_2$ has the same second number of sub-vectors, $C_1$ = 1, and $C_2$ = 1.

In this embodiment of the present application, in a case where $C_1$ = 1, the basis vector set $U_1$ is divided into one basis vector group or the basis vector set $U_1$ is not grouped at all, and all basis vectors in the basis vector set $U_1$ include the same number of sub-vectors, which may be denoted as the first number of sub-vectors. Similarly, in a case where $C_2$ = 1, the basis vector set $U_2$ is divided into one basis vector group or the basis vector set $U_2$ is not grouped, and all basis vectors in the basis vector set $U_2$ include the same number of sub-vectors, which may be denoted as the second number of sub-vectors. The first number of sub-vectors of the basis vector set $U_1$ corresponding to codeword $W_1$ may be different from the second number of sub-vectors of the basis vector set $U_2$ corresponding to codeword $W_2$. The basis vectors in the basis vector sets corresponding to the codewords $W_1$ and $W_2$ may be the basis vectors directly satisfying the basis vector model or may be generated by a weighted sum of multiple basis vectors satisfying the basis vector model.

Further, on the basis of the above embodiments of the present application, $C_1$ = 2, $C_2$ = 2, the basis vectors in the basis vector set $U_1$ are grouped into two basis vector groups, the basis vectors in the basis vector set $U_2$ are grouped into two basis vector groups, and the number of sub-vectors included in at least one basis vector group of the basis vector set $U_1$ is different from the number of sub-vectors included in one basis vector group of the basis vector set $U_2$.

In this embodiment of the present application, the basis vector set $U_1$ and the basis vector set $U_2$ are each grouped into two basis vector groups, and the number of sub-vectors included in at least one of the two basis vector groups of the basis vector set $U_1$ is different from the number of sub-vectors included in one basis vector group of the basis vector set $U_2$. It is to be understood that the basis vectors in the two basis vector groups of the basis vector set $U_1$ may construct the column vectors of the codeword $W_1$ in the form of Kronecker products. For example, one basis vector may exist in each of the two basis vector groups, and the Kronecker product of the two basis vectors may construct a column vector of the codeword $W_1$. For example, several basis vectors may exist in each of the two basis vector groups, Kronecker products

may be determined pairwise between these two sets of several basis vectors, and the weighted sum of these Kronecker products may construct a column vector of the codeword $W_1$. Similarly, the basis vectors in the two basis vector groups of the basis vector set $U_2$ may construct the column vectors of the codeword $W_2$ in the form of Kronecker products.

Further, on the basis of the above embodiments of the present application, $C_1 \geq 2$, $C_2 \geq 2$, the basis vectors in the basis vector set $U_1$ are grouped into multiple basis vector groups, the basis vectors in the basis vector set $U_2$ are grouped into multiple basis vector groups, and the number of sub-vectors included in at least one basis vector group of the basis vector set $U_1$ is different from the number of sub-vectors included in one basis vector group of the basis vector set $U_2$. For example, in some communication scenarios, the column vectors of the codeword may be constructed by multiple basis vectors in the form of weighted sums or may be obtained by a weighted sum of Kronecker products of basis vectors. Therefore, a single column vector of the codeword may be constructed by multiple basis vectors. The set including these basis vectors includes basis vectors including different numbers of sub-vectors. Based on the differences in the number of sub-vectors, the basis vectors may be grouped into different basis vector groups. The number of sub-vectors included in at least one basis vector group of the basis vector set used for constructing the codeword $W_1$ is different from the number of sub-vectors included in one basis vector group of the basis vector set used for constructing the codeword

$W_2$.

In an example embodiment, the feedback of channel state information may include the following steps.

Step 1: A reference signal sent by the first communication node is received, and channel estimation is performed according to the received reference signal to obtain channel information.

The reference signal may be a pilot signal used for channel estimation, and such a signal may be a known signal sequence. The sequence may be denoted as s, and then the received signal may be denoted as:

$$y = Hs + n.$$

In the above formula, H denotes a channel matrix, y denotes a received signal vector, and n denotes a noise vector. The channel estimation may be performed through an algorithm such as MMSE or low-order LMMSE, and then the channel matrix H is obtained. Since the dimension of H is generally large, directly feeding H back to the first communication node may cause a large overhead, and thus, the channel information generally needs to be quantized.

S2: A codebook for feedback is determined according to the obtained channel information.

The codebook is a codeword set and includes multiple codewords for configuring the precoding of a MIMO array. All codewords of the codebook may be generated according to the codeword model provided by the present application, or some codewords may be generated through other models. The codebook includes at least two codewords $W_1$ and $W_2$, and the number of column vectors constructing the codewords $W_1$ and $W_2$ differs. Moreover, at least one basis vector constructing different column vectors of the codeword $W_1$ has the same sub-vector number $K_1$, at least one basis vector constructing different column vectors in the codeword $W_2$ has the same sub-vector number $K_2$, and $K_1$ is not equal to $K_2$. The codebook includes at least two codewords $W_1$ and $W_2$ including the same number of column vectors, and the basis vectors constructing the same column vectors in the codewords $W_1$ and $W_2$ include different numbers of sub-vectors. The codebook includes at least two codewords $W_1$ and $W_2$ include the same number of column vectors, and the basis vectors constructing different column vectors in the codewords $W_1$ and $W_2$ include different numbers of sub-vectors.

S3: A codeword is determined from the selected codebook to represent the current channel.

A codebook is actually a quantized form of spatial channels, a codeword included in the codebook represents information about one of the spatial channels, and it is required to select a codeword matching the current channel from the codebook, where the selected codeword is used for information transmission.

S4: Indication information corresponding to the selected codeword is fed back to the first communication node.

A codeword includes one or more precoding vectors. Directly feeding back the codeword to the first communication node may incur significant channel resource overhead, thereby wasting time-frequency resources. Therefore, only the indication information corresponding to the selected codeword is fed back to the first communication node. The indication information is used for indicating the selected codeword, and the first communication node may select the corresponding codeword from the codebook according to the indication information for precoding configuration. The indication information may be numerical values or other forms of identifiers, and the numerical values or identifiers are used for labelling the codeword.

For example, indication information indexed with numerical values may include digital numbers [0, 1, 3, 4], and the corresponding codeword is $W_{0,1;3,4}$, which indicates that the codeword includes two column vectors. Each column vector is constructed by two sub-vectors, where the two sub-vectors of the first column vector and their coefficients are determined by the indication parameters [0, 1], and the two sub-vectors of the second column vector and their coefficients are determined by the indication parameters [3, 4]. When the sub-vectors of the codeword W employ uniform phase gradient precoding, the four indication parameters may have a one-to-one correspondence with phase gradients. For example, Table 1 illustrates the phase gradients corresponding to the indication information indexed with numerical

values. Through the table, the parameters in the indication information may be mapped to specific phase gradients to generate the required codeword.

Table 1 Relationships between indication parameters and phase gradients

| No. | 1 | 2 | 3 | 4 | 5 | 6 | 7 | 8 | 9 |
|---|---|---|---|---|---|---|---|---|---|
| Phase gradient | (1-1)π/8 | (2-1)π/8 | (3-1)π/8 | (4-1)π/8 | (5-1)π/8 | (6-1)π/8 | (7-1)π/8 | (8-1)π/8 | (9-1)π/8 |

If a codeword includes two column vectors, each column vector is constructed by two sub-vectors having a length of 3. Assuming the coefficient of the first sub-vector in each column vector is 1 and the coefficient of the second sub-vector is determined by the last element of the preceding sub-vector, the indication information requires only four indication parameters to determine the four sub-vectors, and then the corresponding codeword may be obtained. For example, according to Table 1, the codeword $W_{2,5;6,7}$ may be as follows:

$$W_{2,5,6,7} = \begin{pmatrix} \begin{pmatrix} 1 \\ e^{j\pi/8} \\ e^{j2\pi 8} \end{pmatrix} & \begin{pmatrix} 1 \\ e^{j5\pi/8} \\ e^{j2*5\pi/8} \end{pmatrix} \\ e^{j2\pi 8}\begin{pmatrix} 1 \\ e^{j\pi/2} \\ e^{j2\pi/2} \end{pmatrix} & e^{j2*5\pi/8}\begin{pmatrix} 1 \\ e^{j3\pi/4} \\ e^{j2*3\pi/4} \end{pmatrix} \end{pmatrix}.$$

As can be seen, due to the correlation between sub-vectors and their coefficients in the column vector model V, the feedback method provided by the present application may utilize fewer indication parameters for channel feedback, thereby reducing time-frequency resource overhead. Additionally, decomposing the column vectors in the codeword into multiple sub-vectors enables more granular channel information, thereby leading to greater beamforming gain. The above is only an example of feasible indication information; other suitable formats of indication information may be adopted in practical applications, which is not limited here.

Since each column vector in the codeword model provided by the application includes sub-vectors and their coefficients and a correlation relationship exists between these sub-vectors and their coefficients, after a part of the sub-vectors and their coefficients are determined, the remainder may also be determined. Therefore, an indication parameter of at least one indication parameter in the indication information may simultaneously indicate multiple elements in the codeword. The indication parameter here may be a single indication number or a group of indication numbers. For example, [0, 1] in $W_{0,1;3,4}$ may represent two separate indication parameters or a single indication parameter.

In an embodiment, the column vectors of the codeword satisfy the form of the basis vector model u, the indication information of the codeword includes at least one indication parameter, and an indication parameter simultaneously indicates at least two elements in the set FS, where FS is a set including the sub-vectors and sub-vector coefficients of one column vector of the codeword. For example, a codeword may satisfy the following form:

$$W^{(s)}_{a,b;l,m,n;c,d;p,q} = \begin{pmatrix} V_1 & V_2 \end{pmatrix} = \begin{pmatrix} \alpha_a v_l & \alpha_c v_p \\ \alpha_b v_m & \alpha_d v_p \\ \alpha_b v_n & \alpha_q v_q \end{pmatrix}.$$

In the above formula, the column vectors $V_1$ and $V_2$ are $V_1 = (\alpha_a v_l, \alpha_b v_l, \alpha_c v_m)^T$ and $V_2 = (\alpha_d v_p, a_e v_p, \alpha_f v_q)^T$, and the two column vectors satisfy the form of the basis vector model u. The form of the codeword indicates that the codeword supports 2-layer transmission, and the precoding vector in each layer includes three sub-vectors, that is, understandably, the MIMO array is divided into three subarrays.

The indication information of the codeword includes the superscript s, which indicates the codebook information, and the subscripts a, b, l, m, n, c, d, p and q, which indicate the column vector information of the codeword. The indication parameter b simultaneously indicates the last two sub-coefficients of the column vector $V_1$ of the codeword, the indication parameter p simultaneously indicates the first two sub-vectors of the column vector $V_2$ of the codeword, and the indication

parameter q simultaneously indicates the last sub-vector and its corresponding coefficient. In more general cases, a single indication parameter in the indication information may indicate two or more elements in the set FS.

In another embodiment, the column vectors of the codeword may be formed by the Kronecker product of two vectors satisfying the basis vector model u. For example, the i-th column vector of a codeword may be expressed in the following form:

$$V_i = u_1 \otimes u_2 = \begin{pmatrix} \alpha_{11} v_{11} \\ \alpha_{12} v_{21} \\ \alpha_{13} v_{31} \end{pmatrix} \otimes \begin{pmatrix} \alpha_{21} v_{21} \\ \alpha_{22} v_{22} \\ \alpha_{23} v_{23} \end{pmatrix}.$$

According to the correlation relationship between sub-vectors and sub-vector coefficients in the basis vector model, at least one parameter in the indication information may indicate two elements in the set FS, where the set FS includes sub-vectors and sub-vector coefficients in either $u_1$ or $u_2$.

In another embodiment, the column vectors of the codeword may be generated by a weighted sum of several column vectors satisfying the basis vector model u. For example, the i-th column vector of a codeword is as follows:

$$V_i = 0.6u_1 + 0.3u_2 + 0.1u_3 = 0.6\begin{pmatrix} \alpha_{11} v_{11} \\ \alpha_{12} v_{21} \end{pmatrix} + 0.3\begin{pmatrix} \alpha_{21} v_{21} \\ \alpha_{22} v_{22} \end{pmatrix} + 0.1\begin{pmatrix} \alpha_{31} v_{31} \\ \alpha_{32} v_{32} \end{pmatrix}.$$

In the above formula, 0.6, 0.3 and 0.1 are preset weight coefficients, and $u_1$, $u_2$ and $u_3$ satisfy the basis vector model u and each includes two sub-vectors. The indication information fed back needs to include the indication information of $u_1$, $u_2$ and $u_3$, and at least one parameter in the indication information may indicate two elements in the set FS, where the set FS includes sub-vectors and sub-vector coefficients in $u_1$, $u_2$ or $u_3$.

In another embodiment, the column vectors of the codeword may be obtained by a weighted sum of multiple column vectors, where each column vector is formed by the Kronecker product of two vectors satisfying the basis vector model u. For example, the i-th column vector of a codeword may be obtained in the following manner:

$$V_i = 0.6V_{i1} + 0.4V_{i2} = 0.6u_{11} \otimes u_{12} + 0.4u_{21} \otimes u_{22}.$$

In the above formula, 0.6 and 0.4 are weight coefficients, and $u_{11}$, $u_{12}$, $u_{21}$ and $u_{22}$ satisfy the basis vector model u. The indication information fed back needs to include the indication information of $u_{11}$, $u_{12}$, $u_{21}$ and $u_{22}$, and at least one parameter in the indication information may indicate two elements in the set FS, where the set FS includes sub-vectors and sub-vector coefficients in $u_{11}$, $u_{12}$, $u_{21}$ or $u_{22}$.

In another embodiment, a column vector of the codeword includes multiple sub-vectors, and each sub-vector may be constructed using one of the methods described in the preceding three embodiments. Correspondingly, the indication information fed back needs to include the indication information of all basis vectors used for constructing the column vector, and at least one parameter in the indication information may indicate two elements in the set FS, where the set FS includes sub-vectors and sub-vector coefficients of one of the basis vectors used for constructing the column vector.

In practical engineering applications, the indication parameter may be further compressed and encoded before being fed back to the first communication node to reduce feedback overhead. The first communication node decompresses the received information to obtain the required indication information and then determines the selected codeword according to the indication information.

FIG. 6 is a structure diagram of a channel information feedback apparatus according to embodiments of the present application. The apparatus may perform the channel information feedback method provided in any embodiment of the present application and has function modules and beneficial effects corresponding to the performed method. The apparatus may be implemented by software and/or hardware. As shown in FIG. 6, the apparatus provided in this embodiment of the present application includes a channel measurement module 301, a codebook determination module 302, a codeword determination module 303 and an information feedback module 304.

The channel measurement module 301 is configured to determine a measurement result of channel state information according to a measured reference signal.

The codebook determination module 302 is configured to determine a codebook, where the codebook includes at least two codewords.

The codeword determination module 303 is configured to determine a codeword W from the codebook according to the measurement result.

The information feedback module 304 is configured to feed back indication information of the codeword W.

The codeword W is a matrix of N rows and r columns and includes r column vectors $V_1$, $V_2$, ..., and $V_r$ having a length N, where N > 1, and r is a positive integer. The r column vectors of the codeword W are constructed according to a basis vector model u:

$$u = \begin{bmatrix} \alpha_1 v_1 \\ \alpha_2 v_2 \\ \alpha_3 v_3 \\ \vdots \\ \alpha_K v_K \end{bmatrix}.$$

The basis vector model u includes K sub-vectors, the length of a k-th sub-vector $v_k$ is $N_k$, $\alpha_k$ is a sub-vector coefficient, $K \geq 1$, $1 \leq k \leq K$, and $N_k \geq 1$. The codebook includes at least two codewords $W_1$ and $W_2$, basis vectors used for constructing column vectors in the codeword $W_1$ form a basis vector set $U_1$, and basis vectors used for constructing column vectors in the codeword $W_2$ form a basis vector set $U_2$, where the basis vector set $U_1$ and the basis vector set $U_2$ satisfy: the number of sub-vectors of at least one basis vector in the basis vector set $U_1$ is different from the number of sub-vectors of a basis vector in the basis vector set $U_2$.

In some embodiments of the present application, the basis vectors in the basis vector set $U_1$ are grouped into $C_1$ basis vector groups, the basis vectors in the basis vector set $U_2$ are grouped into $C_2$ basis vector groups, the basis vectors belonging to the same one basis vector group include the same number of sub-vectors, and the number of sub-vectors included in at least one basis vector group of the basis vector set $U_1$ is different from the number of sub-vectors included in one basis vector group of the basis vector set $U_2$, where $C_1 \geq 1$, and $C_2 \geq 1$.

In some embodiments of the present application, a subset $FS_2$ is determined according to a subset $FS_1$ of a set $FS = [v_1, v_2, ..., v_K, \alpha_1, \alpha_2, ..., \alpha_K]$ including sub-vectors and sub-vector coefficients in the basis vector model u.

In some embodiments of the present application, the indication information includes at least one indication parameter for the sub-vector of the basis vector constructing the column vector in the codeword W, where the basis vector satisfies the basis vector model u.

In some embodiments of the present application, the indication information includes at least one indication parameter, an indication parameter simultaneously indicates at least two sub-vectors or at least two sub-vector coefficients.

In some embodiments of the present application, the k-th sub-vector $v_k$ of the basis vector model u satisfies the following form:

$$v_k = \begin{cases} \begin{bmatrix} 1 & e^{j\theta_k} & \cdots & e^{j(N_k-1)\theta_k} \end{bmatrix}, & N_k > 1, \\ 1, & N_k = 1, \end{cases}$$

where $\theta_k$ is a real number, and j is an imaginary unit.

In some embodiments of the present application, the k-th sub-vector $v_k$ of the basis vector model u is formed by the Kronecker product of two basis vectors $v_{k1}$ and $v_{k2}$, where the two basis vectors each satisfy the following form:

$$v_{kl} = \begin{cases} \begin{bmatrix} 1 & e^{j\theta_{kl}} & \cdots & e^{j(N_{kl}-1)\theta_{kl}} \end{bmatrix}, & N_{kl} > 1, \\ 1, & N_{kl} = 1, \end{cases}$$

where $\theta_{k1}$ is a real number, j is an imaginary unit, 1 E [1, 2], and $N_{k1} * N_{k2} = N_k$.

In some embodiments of the present application, the k-th sub-vector $v_k$ of the basis vector model u satisfies the following form:

$$v_k = \begin{cases} \begin{bmatrix} 1 & e^{j\theta_k^{(1)}} & \cdots & e^{j\theta_k^{(N_k-1)}} \end{bmatrix}, & N_k > 1, \\ 1, & N_k = 1, \end{cases}$$

where $\theta_k^{(n)} = \xi_k + n\eta_k + n^2\zeta_k$, $\xi_k$, $\eta_k$ and $\zeta_k$ are preset real-valued constants, j is an imaginary unit, and $1 \le n \le N_k$.

In some embodiments of the present application, the k-th sub-vector $v_k$ of the basis vector model u is formed by the Kronecker product of two basis vectors $v_{k1}$ and $v_{k2}$, where the two basis vectors each satisfy the following form:

$$v_{kl} = \begin{cases} \begin{bmatrix} 1 & e^{j\theta_{kl}^{(1)}} & \cdots & e^{j\theta_{kl}^{(N_{kl}-1)}} \end{bmatrix}, & N_{kl} > 1, \\ 1, & N_{kl} = 1, \end{cases}$$

where $\theta_{kl}^{(n)} = \xi_{kl} + n\eta_{kl} + n^2\zeta_{kl}$, $\xi_{kl}$, $\eta_{kl}$, and $\zeta_{kl}$ are preset real-valued constants, j is an imaginary unit, $1 \in [1,2]$, $1 \le n \le N_{kl}$, and $N_{k1} * N_{k2} = N_k$.

In some embodiments, the i-th column vector $V_i$ of the codeword W is a column vector satisfying the basis vector model u, where i = 1, 2,..., r.

In some other embodiments of the present application, the i-th column vector $V_i$ of the codeword W is formed by the Kronecker product of two vectors $u_1$ and $u_2$, where $u_1$ and $u_2$ are column vectors satisfying the basis vector model u.

In some other embodiments of the present application, the i-th column vector $V_i$ of the codeword W is generated by a weighted sum of M column vectors:

$$V_i = \sum_{m=1}^{M} \beta_m u_m .$$

In the above formula, $\beta_m$ is a weight coefficient, $u_m$ is a column vector satisfying the basis vector model u, i = 1, 2, ..., r, and m = 1, 2, ..., M.

In some other embodiments of the present application, the i-th column vector $V_i$ of the codeword W is generated by a weighted sum of M column vectors:

$$V_i = \sum_{m=1}^{M} \beta_m w_m .$$

In the above formula, $\beta_m$ is a weight coefficient, $w_m$ is formed by the Kronecker product of two column vectors $u_{m1}$ and $u_{m2}$, $u_{m1}$ and $u_{m2}$ are column vectors satisfying the basis vector model u, i = 1, 2, ..., r, and m = 1, 2, ..., M.

In some embodiments of the present application, the i-th column vector $V_i$ of the codeword W satisfies the following form:

$$V_i = \begin{bmatrix} c_1 V_{i1} \\ c_2 V_{i2} \\ \vdots \\ c_S V_{iS} \end{bmatrix}.$$

In the above formula, $c_s$ is a coefficient, $V_{is}$ is a sub-vector, and $V_{is}$ is generated in at least one of the following manners, where s = 1, 2, ..., S.

$V_{is}$ is directly generated from the basis vector model u.

$V_{is}$ is formed by the Kronecker product of two vectors $u_1$ and $u_2$, where $u_1$ and $u_2$ are column vectors satisfying the basis vector model u.

$V_{is}$ is generated by a weighted sum of M column vectors of the basis vector model according to $V_{is} = \sum_{m=1}^{M} \beta_m u_m$, where $\beta_m$ is a weight coefficient, $u_m$ is a column vector satisfying the basis vector model u, i = 1, 2, ..., r, and m = 1, 2, ..., M.

$V_{is}$ is generated by a weighted sum of M column vectors of the basis vector model according to $V_{is} = \sum_{m=1}^{M} \beta_m w_m$, where $\beta_m$ is a weight coefficient, $w_m$ is formed by the Kronecker product of two column vectors

$u_{m1}$ and $u_{m2}$, $u_{m1}$ and $u_{m2}$ are column vectors satisfying the basis vector model u, i = 1, 2, ..., r, and m= 1, 2, ..., M.

In some embodiments of the present application, the basis vector in the basis vector set $U_1$ has the same first number of sub-vectors, the basis vector in the basis vector set $U_2$ has the same second number of sub-vectors, $C_1 = 1$, and $C_2 = 1$.

In some embodiments of the present application, $C_1 = 2$, $C_2 = 2$, the basis vectors in the basis vector set $U_1$ are grouped into two basis vector groups, the basis vectors in the basis vector set $U_2$ are grouped into two basis vector groups, and the number of sub-vectors included in at least one basis vector group of the basis vector set $U_1$ is different from the number of sub-vectors included in one basis vector group of the basis vector set $U_2$.

FIG. 7 is a structure diagram of an electronic device according to embodiments of the present application. The electronic device includes a processor 40 and a memory 41. One or more processors 40 may be provided in the electronic device, and one processor 40 is shown as an example in FIG. 7. The processor 40 and the memory 41 in the electronic device may be connected via a bus or in other manners, and the connection via a bus is shown as an example in FIG. 7.

As a computer-readable storage medium, the memory 41 may be configured to store software programs, computer-executable programs and modules, such as programs corresponding to the channel information feedback method in any embodiment of the present application and modules corresponding to the channel information feedback apparatus in the embodiments of the present application (the channel measurement module 301, the codebook determination module 302, the codeword determination module 303 and the information feedback module 304). The processor 40 executes software programs, instructions, and modules stored in the memory 41 to perform various functions and data processing of the electronic device, that is, perform the channel information feedback method described above.

The memory 41 may mainly include a program storage region and a data storage region. The program storage region may store an operating system and an application program required by at least one function. The data storage region may store data created according to the use of the electronic device. Additionally, the memory 41 may include a high-speed random-access memory and may also include a nonvolatile memory such as at least one disk memory, a flash memory, or another nonvolatile solid-state memory. In some examples, the memory 41 may further include memories which are remotely disposed with respect to the processor 40. These remote memories may be connected to the electronic device via a network. Examples of the preceding network include, but are not limited to, the Internet, an intranet, a local area network, a mobile communication network, and a combination thereof.

The embodiments of the present application further provide a storage medium including computer-executable instructions. When executed by a computer processor, the computer-executable instructions are used for causing the computer processor to perform a channel information feedback method. The method includes the following.

A measurement result of channel state information is determined according to a measured reference signal.

A codebook is determined, where the codebook includes at least two codewords.

A codeword W is determined from the codebook according to the measurement result.

Indication information of the codeword W is fed back.

The codeword W is a matrix of N rows and r columns and includes r column vectors $V_1$, $V_2$, ..., and $V_r$ having a length N, where N > 1, and r is a positive integer.

The r column vectors of the codeword W are constructed according to the following basis vector model u:

$$u = \begin{bmatrix} \alpha_1 v_1 \\ \alpha_2 v_2 \\ \alpha_3 v_3 \\ \vdots \\ \alpha_K v_K \end{bmatrix}.$$

The basis vector model u includes K sub-vectors, the length of a k-th sub-vector $v_k$ is $N_k$, $\alpha_k$ is a sub-vector coefficient, $K \geq 1$, $1 \leq k \leq K$, $N_k \geq 1$, the codebook includes at least two codewords $W_1$ and $W_2$, basis vectors used for constructing column vectors in the codeword $W_1$ form a basis vector set $U_1$, and basis vectors used for constructing column vectors in the codeword $W_2$ form a basis vector set $U_2$, where the basis vector set $U_1$ and the basis vector set $U_2$ satisfies: the number of sub-vectors of at least one basis vector in the basis vector set $U_1$ is different from the number of sub-vectors of a basis vector in the basis vector set $U_2$.

From the preceding description of embodiments, it is apparent to those skilled in the art that the present application may be implemented by software and necessary general-purpose hardware or may be implemented by hardware, and the former is a preferred implementation in many cases. Based on the above understanding, the technical solutions of the present application substantially, or the part contributing to the existing art, may be embodied in the form of

a software product. The computer software product may be stored in a computer-readable storage medium such as a floppy disk, a read-only memory (ROM), a random-access memory (RAM), a flash memory, a hard disk, or an optical disk of a computer and includes several instructions for causing a computer device (which may be a personal computer, a server or a network device) to perform the methods in the embodiments of the present application.

It is to be noted that units and modules included in the preceding embodiment of the apparatus are divided according to functional logic, and the division is not limited to this as long as the corresponding functions can be implemented. Additionally, the specific names of function units are used for distinguishing between each other and are not to limit the scope of the present application.

It is to be understood by those of ordinary skill in the art that some or all steps of the preceding method and function modules/units in the preceding apparatus or system may be implemented as software, firmware, hardware, and suitable combinations thereof.

In the hardware implementation, the division of the preceding function modules/units may not correspond to the division of physical components. For example, one physical component may have multiple functions, or one function or step may be performed jointly by several physical components. Some or all physical components may be implemented as software executed by a processor such as a central processing unit, a digital signal processor or a microprocessor, may be implemented as hardware, or may be implemented as integrated circuits such as application-specific integrated circuits. Such software may be distributed on computer-readable media. The computer-readable media may include computer storage media (or non-transitory media) and communication media (or transitory media). As is known to those of ordinary skill in the art, the term computer storage media includes volatile and nonvolatile media as well as removable and non-removable media implemented in any method or technology for storing information (such as computer-readable instructions, data structures, program modules or other data). The computer storage media include, but are not limited to, a RAM, a ROM, an electrically erasable programmable read-only memory (EEPROM), a flash memory, or other memory technologies, a compact disk read-only memory (CD-ROM), a digital video disc (DVD) or other optical disc memories, magnetic cassettes, magnetic tapes, magnetic disk memories or other magnetic storage apparatuses, or any other medium used for storing the desired information and accessible by a computer. Additionally, as is known to those of ordinary skill in the art, the communication media generally include computer-readable instructions, data structures, program modules or other data in a modulated data signal such as a carrier wave or other transport mechanism and include any information delivery media.

Optional embodiments of the present application are described above with reference to the drawings and are not intended to limit the scope of the claims of the present application. Any modifications, equivalent substitutions, and improvements made by those skilled in the art without departing from the scope and substantive content of the present application fall within the scope of the present application.

## Claims

**1.** A channel information feedback method, comprising:

determining a measurement result of channel state information according to a measured reference signal;
determining a codebook, wherein the codebook comprises at least two codewords;
determining a codeword W within the codebook according to the measurement result; and
feeding back indication information of the codeword W;
wherein the codeword W is a matrix that has N rows and r columns and comprises r column vectors $V_1$, $V_2$, ..., and $V_r$ having a length N, wherein N > 1, and r is a positive integer;
the r column vectors of the codeword W are constructed according to the following basis vector model u:

$$u = \begin{bmatrix} \alpha_1 v_1 \\ \alpha_2 v_2 \\ \alpha_3 v_3 \\ \vdots \\ \alpha_K v_K \end{bmatrix},$$

wherein the basis vector model u comprises K sub-vectors, a length of a k-th sub-vector $v_k$ of the K sub-vectors is $N_k$, $\alpha_k$ is a sub-vector coefficient of the k-th sub-vector $v_k$, $K \geq 1$, $1 \leq k \leq K$, and $N_k \geq 1$;
wherein the codebook comprises at least two codewords $W_1$ and $W_2$, basis vectors used for constructing a

column vector in the codeword $W_1$ forms a basis vector set $U_1$, basis vectors used for constructing a column vector in the codeword $W_2$ forms a basis vector set $U_2$, and the basis vector set $U_1$ and the basis vector set $U_2$ satisfy: a number of sub-vectors of at least one basis vector in the basis vector set $U_1$ is different from a number of sub-vectors of a basis vector in the basis vector set $U_2$.

**2.** The method of claim 1, wherein the basis vectors in the basis vector set $U_1$ are grouped into $C_1$ basis vector groups, the basis vectors in the basis vector set $U_2$ are grouped into $C_2$ basis vector groups, basis vectors belonging to a same one of the basis vector groups comprise a same number of sub-vectors, and a number of sub-vectors in at least one basis vector group of the basis vector set $U_1$ is different from a number of sub-vectors in one of the basis vector groups of the basis vector set $U_2$, wherein $C_1 \geq 1$, and $C_2 \geq 1$.

**3.** The method of claim 1, wherein a subset $FS_2$ is determined according to a subset $FS_1$ of a set FS = $[v_1, v_2, ..., v_K, \alpha_1, \alpha_2, ..., \alpha_K]$ comprising sub-vectors and sub-vector coefficients in the basis vector model u.

**4.** The method of claim 1, wherein the indication information comprises at least one indication parameter for a sub-vector of a basis vector constructing a column vector in the codeword W, wherein the basis vector satisfies the basis vector model u.

**5.** The method of claim 1 or 4, wherein an indication parameter of the at least one indication parameter simultaneously indicates at least two sub-vectors or at least two sub-vector coefficients.

**6.** The method of claim 1, wherein the k-th sub-vector $v_k$ of the basis vector model u satisfies the following form:

$$v_k = \begin{cases} \begin{bmatrix} 1 & e^{j\theta_k} & \cdots & e^{j(N_k-1)\theta_k} \end{bmatrix}, & N_k > 1, \\ 1, & N_k = 1, \end{cases}$$

wherein $\theta_k$ is a real number, and j is an imaginary unit.

**7.** The method of claim 1, wherein the k-th sub-vector $v_k$ of the basis vector model u is formed by a Kronecker product of two basis vectors $v_{k1}$ and $v_{k2}$, wherein the two basis vectors each satisfy the following form:

$$v_{kl} = \begin{cases} \begin{bmatrix} 1 & e^{j\theta_{kl}} & \cdots & e^{j(N_{kl}-1)\theta_{kl}} \end{bmatrix}, & N_{kl} > 1, \\ 1, & N_{kl} = 1, \end{cases}$$

wherein $\theta_{k1}$ is a real number, j is an imaginary unit, $1 \in [1, 2]$, and $N_{k1} * N_{k2} = N_k$.

**8.** The method of claim 1, wherein the k-th sub-vector $v_k$ of the basis vector model u satisfies the following form:

$$v_k = \begin{cases} \begin{bmatrix} 1 & e^{j\theta_k^{(1)}} & \cdots & e^{j\theta_k^{(N_k-1)}} \end{bmatrix}, & N_k > 1, \\ 1, & N_k = 1, \end{cases}$$

wherein $\theta_k^{(n)} = \xi_k + n\eta_k + n^2\zeta_k$, $\xi_k$, $\eta_k$ and $\zeta_k$ are preset real-valued constants, j is an imaginary unit, and $1 \leq n \leq N_k$.

**9.** The method of claim 1, wherein the k-th sub-vector $v_k$ of the basis vector model u is formed by a Kronecker product of two basis vectors $v_{k1}$ and $v_{k2}$, wherein the two basis vectors $v_{k1}$ and $v_{k2}$ each satisfy the following form:

$$v_{kl} = \begin{cases} \begin{bmatrix} 1 & e^{j\theta_{kl}^{(1)}} & \cdots & e^{j\theta_{kl}^{(N_{kl}-1)}} \end{bmatrix}, & N_{kl} > 1, \\ 1, & N_{kl} = 1, \end{cases}$$

wherein $\theta_{kl}^{(n)} = \xi_{kl} + n\eta_{kl} + n^2\zeta_{kl}$ , $\xi_{kl}$, $\eta_{kl}$, and $\zeta_{kl}$ are preset real-valued constants, j is an imaginary unit, $1 \in [1, 2]$, $1 \le n \le N_{kl}$, and $N_{k1} * N_{k2} = N_k$.

**10.** The method of claim 1, wherein an i-th column vector $V_i$ of the codeword W is a column vector satisfying the basis vector model u, wherein i = 1, 2,..., r.

**11.** The method of claim 1, wherein an i-th column vector $V_i$ of the codeword W is formed by a Kronecker product of two vectors $u_1$ and $u_2$, wherein $u_1$ and $u_2$ are column vectors satisfying the basis vector model u.

**12.** The method of claim 1, wherein an i-th column vector $V_i$ of the codeword W is generated by a weighted sum of M column vectors:

$$V_i = \sum_{m=1}^{M} \beta_m u_m ,$$

wherein $\beta_m$ is a weight coefficient, $u_m$ is a column vector satisfying the basis vector model u, i = 1, 2, ..., r, and m = 1, 2, ..., M.

**13.** The method of claim 1, wherein an i-th column vector $V_i$ of the codeword W is generated by a weighted sum of M column vectors:

$$V_i = \sum_{m=1}^{M} \beta_m w_m ,$$

wherein $\beta_m$ is a weight coefficient, $w_m$ is formed by a Kronecker product of two column vectors $u_{m1}$ and $u_{m2}$, $u_{m1}$ and $u_{m2}$ are column vectors satisfying the basis vector model u, i = 1, 2, ..., r, and m = 1, 2, ..., M.

**14.** The method of any one of claims 1, 10, 11, 12 and 13, wherein the i-th column vector $V_i$ of the codeword W satisfies the following form:

$$V_i = \begin{bmatrix} c_1 V_{i1} \\ c_2 V_{i2} \\ \vdots \\ c_S V_{iS} \end{bmatrix},$$

wherein $c_s$ is a coefficient, $V_{is}$ is a sub-vector, s = 1, 2, ..., S, and $V_{is}$ is generated in at least one of the following manners:

$V_{is}$ is directly generated by the basis vector model u;

$V_{is}$ is formed by a Kronecker product of two vectors $u_1$ and $u_2$, wherein $u_1$ and $u_2$ are column vectors satisfying the basis vector model u;

$V_{is}$ is generated by a weighted sum of M column vectors of the basis vector model through $V_{is} = \sum_{m=1}^{M} \beta_m u_m$ , wherein $\beta_m$ is a weight coefficient, $u_m$ is a column vector satisfying the basis vector model u, i = 1, 2, ..., r, and m = 1, 2, ..., M; or

$V_{is}$ is generated by a weighted sum of M column vectors of the basis vector model through $V_{is} = \sum_{m=1}^{M} \beta_m w_m$ ,

wherein $\beta_m$ is a weight coefficient, $w_m$ is formed by a Kronecker product of two column vectors $u_{m1}$ and $u_{m2}$, $u_{m1}$ and $u_{m2}$ are column vectors satisfying the basis vector model u, i = 1, 2, ..., r, and m= 1, 2, ..., M.

**15.** The method of any one of claims 2, 10 and 12, wherein the basis vectors in the basis vector set $U_1$ comprise a same first number of sub-vectors, the basis vectors in the basis vector set $U_2$ comprise a same second number of sub-vectors, $C_1$ = 1, and $C_2$ = 1.

**16.** The method of any one of claims 2, 11 and 13, wherein $C_1$ = 2, $C_2$ = 2, the basis vectors in the basis vector set $U_1$ are grouped into two basis vector groups, the basis vectors in the basis vector set $U_2$ are grouped into two basis vector groups, and a number of sub-vectors in at least one basis vector group of the basis vector set $U_1$ is different from a number of sub-vectors in one of the basis vector groups of the basis vector set $U_2$.

**17.** An electronic device, comprising:

at least one processor; and
a memory configured to store at least one program;
wherein when the at least one program is executed by the at least one processor, the at least one processor is caused to perform the method of any one of claims 1 to 16.

**18.** A computer-readable storage medium storing at least one program which, when executed by at least one processor, causes the at least one processor to perform the method of any one of claims 1 to 16.

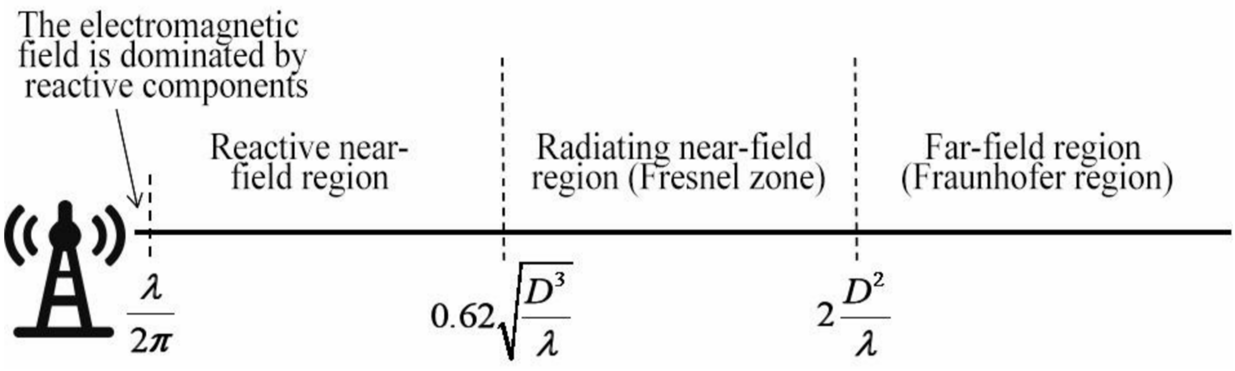

The electromagnetic field is dominated by reactive components
Reactive near-field region
Radiating near-field region (Fresnel zone)
Far-field region (Fraunhofer region)
$\frac{\lambda}{2\pi}$
$0.62\sqrt{\frac{D^3}{\lambda}}$
$2\frac{D^2}{\lambda}$


FIG. 1

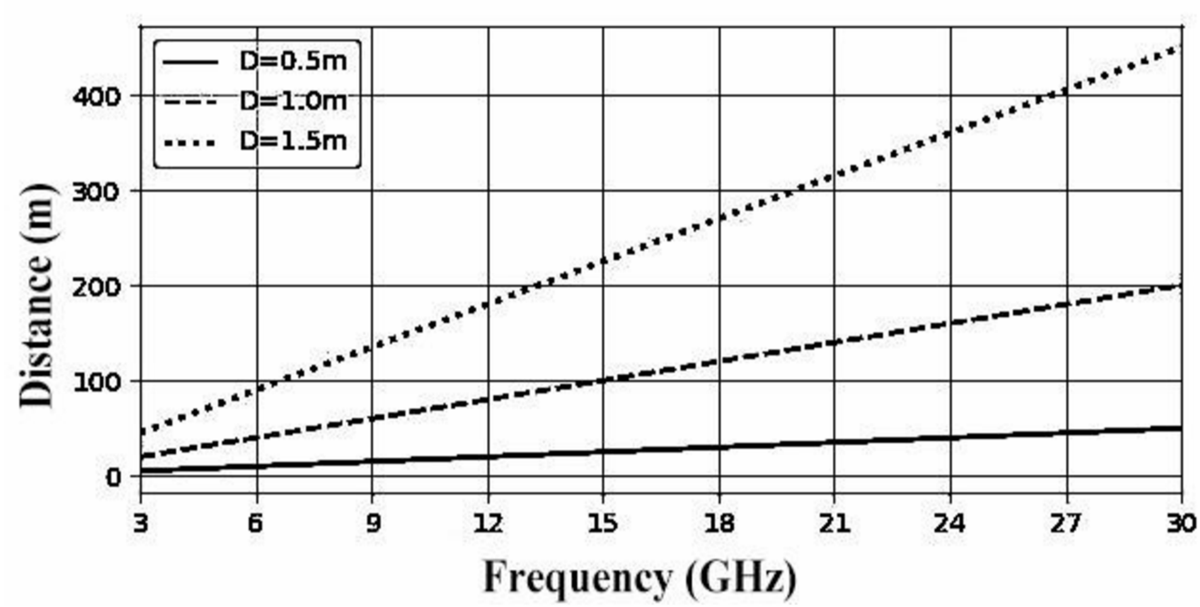

D=0.5m
D=1.0m
D=1.5m
Distance (m)
0
100
200
300
400
3
6
9
12
15
18
21
24
27
30
Frequency (GHz)


FIG. 2

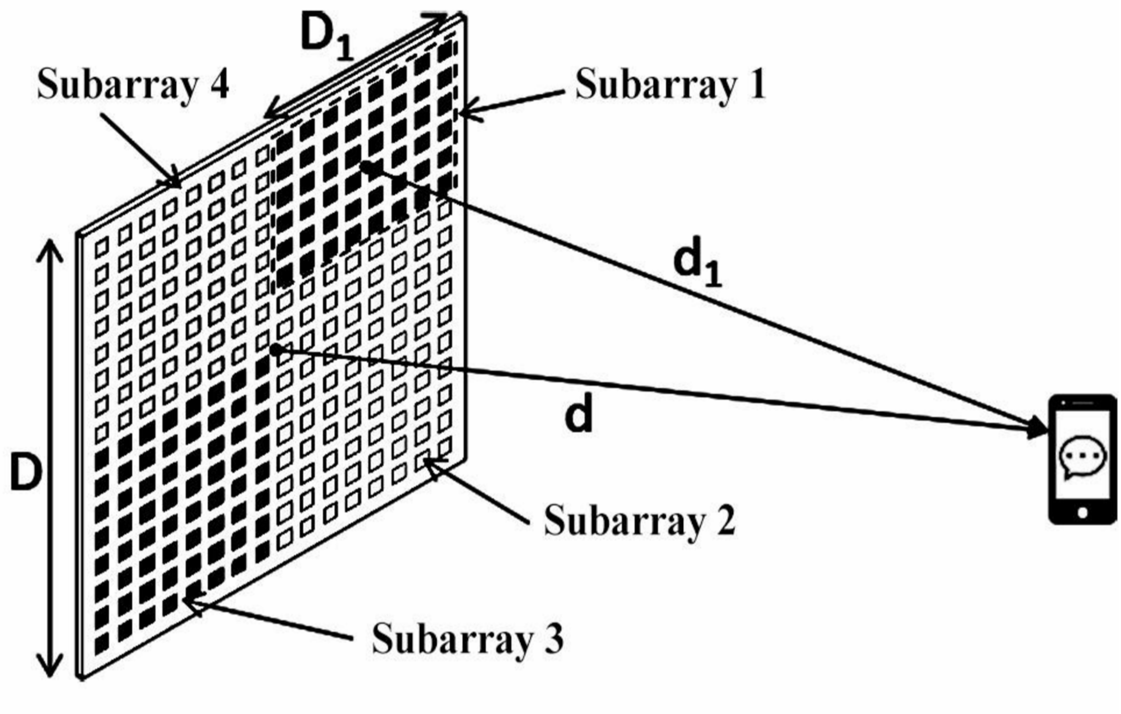
D1
Subarray 4
Subarray 1
d1
d
D
Subarray 2
Subarray 3

FIG. 3

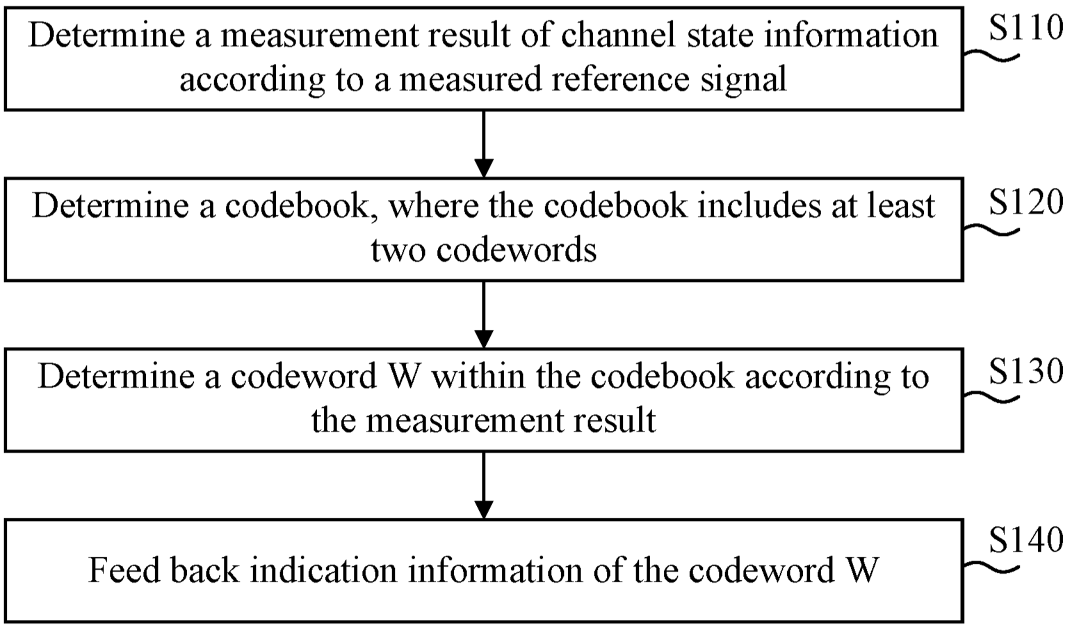
Determine a measurement result of channel state information according to a measured reference signal
S110
Determine a codebook, where the codebook includes at least two codewords
S120
Determine a codeword W within the codebook according to the measurement result
S130
Feed back indication information of the codeword W
S140

FIG. 4

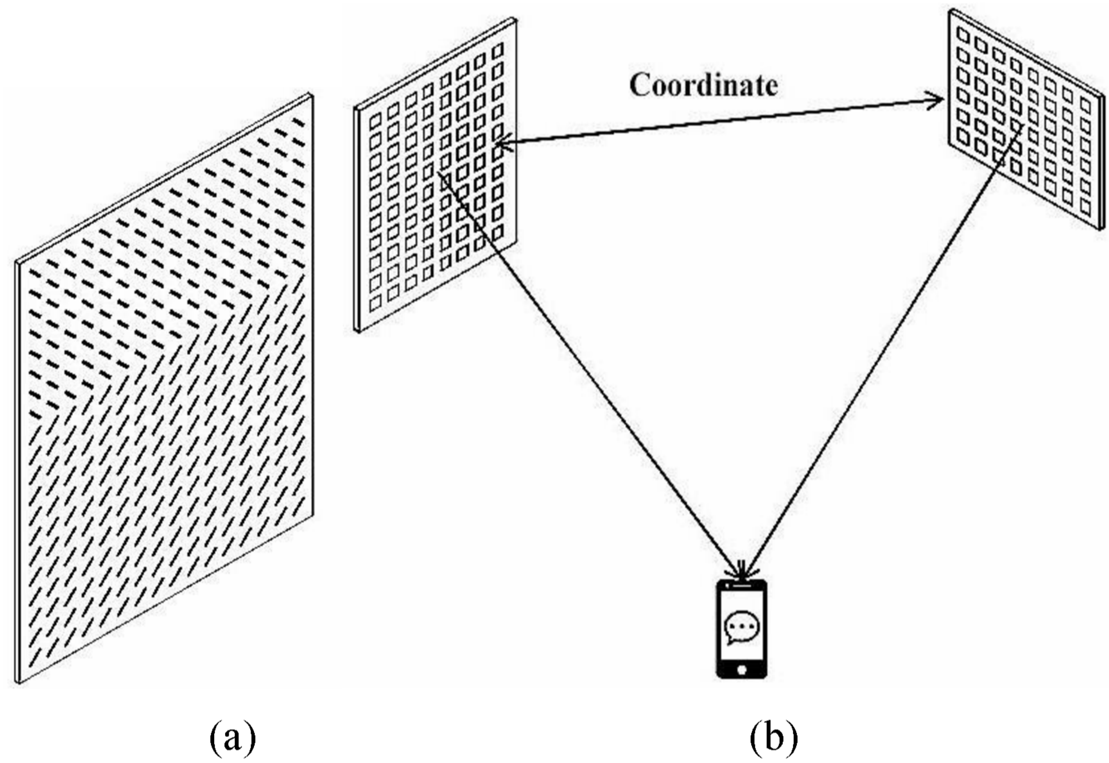
Coordinate
(a)
(b)

FIG. 5

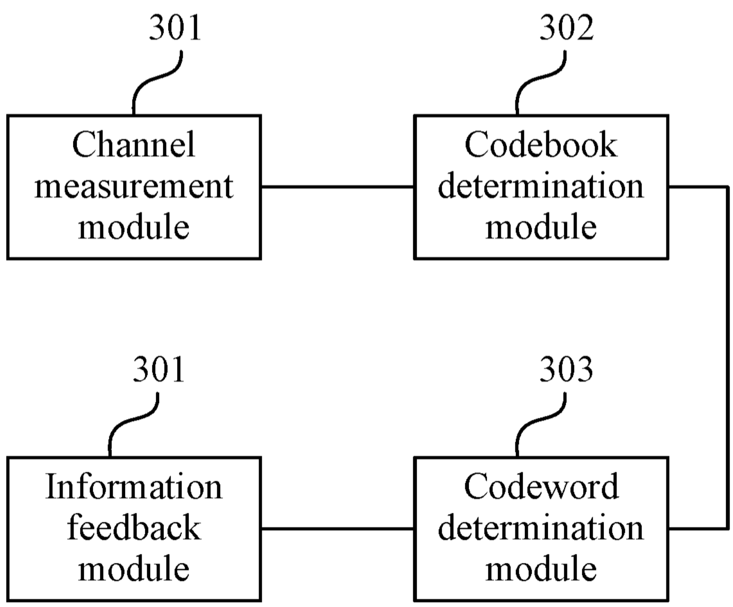
301
302
Channel measurement module
Codebook determination module
301
303
Information feedback module
Codeword determination module

FIG. 6

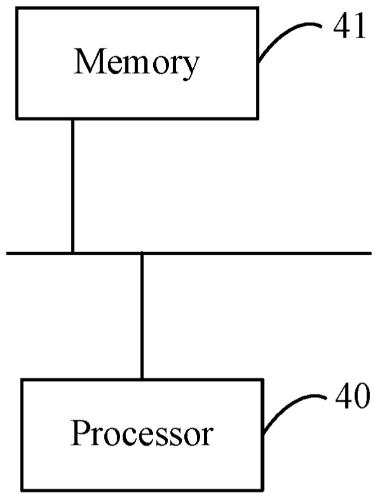


FIG. 7

**INTERNATIONAL SEARCH REPORT**

International application No.
**PCT/CN2023/141400**

**A. CLASSIFICATION OF SUBJECT MATTER**

H04B 7/0456(2017.01)i

According to International Patent Classification (IPC) or to both national classification and IPC

**B. FIELDS SEARCHED**

Minimum documentation searched (classification system followed by classification symbols)

IPC:H04B H04W

Documentation searched other than minimum documentation to the extent that such documents are included in the fields searched

Electronic data base consulted during the international search (name of data base and, where practicable, search terms used)

CNTXT; CNKI; ENTXTC; VEN; 3GPP; IEEE: 码本, 码字, 预编码, 基向量, 矢量, 子向量, 数量, 数目, 个数, 信道信息, 反馈, 加权, 权重, 权值, codebook, codeword, precoding, basis, sus, vector, number, feedback, CSI, weight

**C. DOCUMENTS CONSIDERED TO BE RELEVANT**

| Category* | Citation of document, with indication, where appropriate, of the relevant passages | Relevant to claim No. |
|---|---|---|
| A | WO 2022160322 A1 (HUAWEI TECHNOLOGIES CO., LTD.) 04 August 2022 (2022-08-04) description, paragraphs 190-275 | 1-18 |
| A | CN 114499613 A (TSINGHUA UNIVERSITY) 13 May 2022 (2022-05-13) entire document | 1-18 |
| A | CN 114557073 A (ZTE CORP.) 27 May 2022 (2022-05-27) entire document | 1-18 |
| A | KR 20210114445 A (DATANG MOBILE COMMUNICATIONS EQUIPMENT CO., LTD.) 23 September 2021 (2021-09-23) entire document | 1-18 |
| A | US 2020374175 A1 (HUAWEI TECHNOLOGIES CO., LTD.) 26 November 2020 (2020-11-26) entire document | 1-18 |
| A | WO 2013091526 A1 (HUAWEI TECHNOLOGIES CO., LTD.) 27 June 2013 (2013-06-27) entire document | 1-18 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 March 2024** | **26 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | Telephone No. |

Form PCT/ISA/210 (second sheet) (July 2022)

INTERNATIONAL SEARCH REPORT

International application No.
**PCT/CN2023/141400**

**C. DOCUMENTS CONSIDERED TO BE RELEVANT**

| Category* | Citation of document, with indication, where appropriate, of the relevant passages | Relevant to claim No. |
|---|---|---|
| A | Moderator (SAMSUNG). ""R1-2205362 Rel-18 MIMO CSI Round 3"" *3GPP Tsg_ran\Wg1_rl1,* 16 May 2022 (2022-05-16), entire document | 1-18 |

**INTERNATIONAL SEARCH REPORT**
**Information on patent family members**

International application No.
**PCT/CN2023/141400**

| Patent document cited in search report | | | Publication date (day/month/year) | Patent family member(s) | | | Publication date (day/month/year) |
|---|---|---|---|---|---|---|---|
| WO | 2022160322 | A1 | 04 August 2022 | EP | 4274112 | A1 | 08 November 2023 |
| | | | | EP | 4274112 | A4 | 28 February 2024 |
| | | | | US | 2024030981 | A1 | 25 January 2024 |
| CN | 114499613 | A | 13 May 2022 | WO | 2023103356 | A1 | 15 June 2023 |
| CN | 114557073 | A | 27 May 2022 | WO | 2021102952 | A1 | 03 June 2021 |
| | | | | IN | 202217029145 | A | 02 September 2022 |
| | | | | US | 2022286257 | A1 | 08 September 2022 |
| | | | | EP | 4066557 | A1 | 05 October 2022 |
| | | | | EP | 4066557 | A4 | 21 December 2022 |
| KR | 20210114445 | A | 23 September 2021 | KR | 102555344 | B1 | 12 July 2023 |
| | | | | TW | 202029672 | A | 01 August 2020 |
| | | | | TWI | 720777 | B | 01 March 2021 |
| US | 2020374175 | A1 | 26 November 2020 | US | 11184208 | B2 | 23 November 2021 |
| | | | | EP | 3751768 | A1 | 16 December 2020 |
| | | | | EP | 3751768 | A4 | 20 January 2021 |
| | | | | WO | 2019157757 | A1 | 22 August 2019 |
| WO | 2013091526 | A1 | 27 June 2013 | US | 2014313976 | A1 | 23 October 2014 |
| | | | | US | 9455856 | B2 | 27 September 2016 |
| | | | | EP | 2824847 | A1 | 14 January 2015 |
| | | | | EP | 2824847 | A4 | 06 May 2015 |
| | | | | EP | 2824847 | B1 | 19 October 2016 |
| | | | | JP | 2015503305 | A | 29 January 2015 |
| | | | | JP | 5878646 | B2 | 08 March 2016 |

Form PCT/ISA/210 (patent family annex) (July 2022)